# EUROPEAN PATENT SPECIFICATION

(11) **EP 0 951 016 B1**
(45) Date of publication and mention of the grant of the patent: **14.07.2004**
(21) Application number: 98106898.4
(22) Date of filing: 15.04.1998
(51) Int. Cl.: G11B 15/02

(54) **Method for fast checking a timer of a video cassette tape recorder and video cassette tape recorder for carrying out the method**
Verfahren zur schnellen Überwachung des Timers eines Videobandkassettegeräts und Videobandkassettengerät zur Durchfürung des Verfahrens
Méthode pour vérifier rapidement une minuterie d'un enregistreur à cassette vidéo et enrégistreur à cassette vidéo de mise en oeuvre du méthode

(43) Date of publication of application: 20.10.1999
(73) Proprietor: DAEWOO ELECTRONICS CO., LTD, Seoul (KR)
(72) Inventor: Jeong, Byoung-Chul, Pyeongtaik-Shi, Kyeongki-Do (KR)
(74) Representative: Dr. Weitzel & Partner

(56) References cited:
- EP-A- 0 460 520
- EP-A- 0 725 542
- EP-A- 0 810 788
- US-A- 5 231 493

## Description

The present invention relates to a service mode of a video cassette tape recorder, and more particularly to a method and an apparatus for fast checking a timer of a video cassette tape recorder which can check a timer function such as a reservation recording in a relatively short time while carrying out the service mode.

Generally, a video cassette tape recorder has a reservation recording function. Reservation recording is a function which automatically records a broadcast program from a selected channel at preset data and time if a user has input information including a channel, a data, and a start time of a desired television broadcast program.

However, when there is a change in a start time of the broadcast program due to a plan of a broadcasting station, an undesired program may be recorded.

Accordingly, techniques which can detect the start time by decoding a signal having a program start time information in a received television signal sent by the broadcasting station have been provided.

As one of the above mentioned technique, there is a program delivery control (PDC) method used in Europe. The PDC method constructs date, start time, channel information in a data area which is not used during a data format of a teletext broadcasting and superposes the constructed program information onto a television broadcasting signal so as to send the same.

The set decodes the PDC data from a received broadcasting signal at a time when a power of the set is turned off or at a predetermined time and refreshes a reservation recording information with the decoded program information, thereby synchronizing the reservation recording to an actual program broadcasting time of the broadcasting station.

The timer function such as the reservation recording is checked at the service mode so that whether or not the reservation recording is correctly carried out at the preset reservation time is tested. However, the timer check at the service mode with a normal clock consumes a relatively long time and large effort. Accordingly, in a case where the test is carried out in a few minutes after a reservation setting for the test is done, there is a problem in setting the reservation.

EP-A-0 725 541 discloses a video recorder with a PDC or VPS decoder.

The present invention is intended to overcome the above described disadvantages. Therefore, it is an object of the present invention to provide a method and an apparatus for fast checking a timer of a video cassette tape recorder which can check a timer function of a set in a relatively short time.

Also, it is an another object of the present invention to provide a method and an apparatus for fast checking a timer of a video cassette tape recorder which can avoid an erroneous manipulation of a reservation recording information due to a PDC operation during the fast timer check.

In order to achieve the object of the present invention, there is provided a method for fast checking a timer of a video cassette tape recorder, which comprises the steps of:
displaying a service menu picture of a service mode when the service mode is selected;
displaying a timer check menu picture if a timer check mode in the service menu picture is selected;
locking a refresh operation of a television program information and operating a timer with a fast clock if a fast clock operation mode in the timer check menu picture is selected;
carrying out a reservation recording after a reservation setting of a television program is done; and
operating the timer with a normal clock when the reservation recording is finished and unlocking a refresh locking state of the television program information.

Also, in order to achieve the object of the present invention, there is provided a video cassette tape recorder, which comprises:
a tuner section for outputting video and audio signals by decoding a television signal of a selected channel;
a decoder for decoding a television program information superposed on the video signal, storing the decoded television program information and refreshing the stored television program information at least once a day;
a video processing section for processing the video signal so as to record the video signal processed onto a video cassette tape loaded in a deck section;
an input means for inputting a remote controller signal;
an on-screen-display signal generating means for outputting an on-screen-display picture signal on a television after receiving an on-screen-display data; and
a control section for displaying a service menu picture of a service mode through the on-screen-display signal generating means when the service mode is selected, displaying a timer check menu picture if a timer check mode in the service menu picture is selected, locking a refresh operation of a television program information of the decoder, operating a timer with a fast clock, carrying out a reservation setting of a television program by the input means, carrying out a reservation recording by controlling the video processing section and the deck section, operating the timer with a normal clock when the reservation recording is finished, and unlocking a refresh locking state of the television program information of the decoder.

The present invention will become more apparent by describing in detail a preferred embodiment thereof with reference to the attached drawings in which:
FIG. 1 is a block diagram illustrating a structure of a video cassette tape recorder having a fast timer check function according to the present invention;
FIGs. 2A and 2B are a flowchart illustrating a method for fast checking a timer of the video cassette tape recorder according to a preferred embodiment of the present invention; and
FIGs. 3 and 4 show error check display pictures according to the present invention;

Hereinafter, a method and an apparatus for fast checking a timer of a video cassette tape recorder according to a preferred embodiment of the present invention will be explained in more detail with reference to the accompanying drawings.

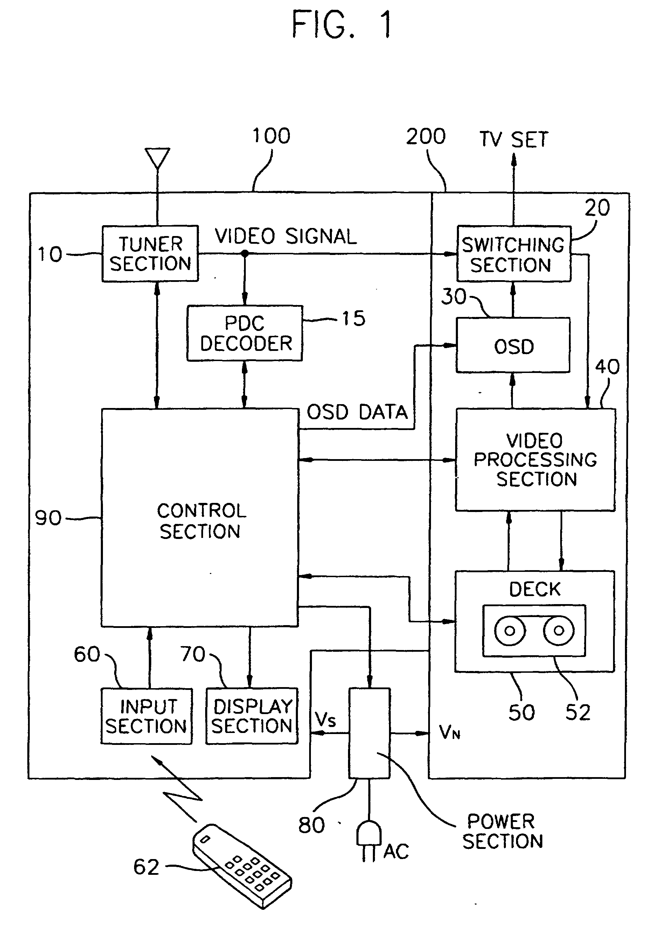

FIG. 1 is a block diagram illustrating a structure of a video cassette tape recorder according to the present invention. As shown in FIG. 1, a video cassette tape recorder includes a tuner section 10, a PDC decoder 15, a switching section 20, an on-screen-display signal generating section 30, a video processing section 40, a deck section 50, an input section 60, a display section 70, a power section 80 and a control section 90.

Tuner section 10 tunes a broadcasting signal of a channel selected among television broadcasting signals received by an antenna, demodulate a tuned signal and outputs video and audio signals (not shown). Also, although it is not shown, tuner section 10 modulates inputted video and audio signals into a broadcasting signal of a specific channel so as to output a high frequency signal. The high frequency signal is provided as an antenna input of a television set.

PDC decoder 15 decodes a PDC data from a video signal which is demodulated and outputted by tuner section 10 at the time when an operating power of a set is turned off or at a predetermined time of the day, for example at six o'clock p.m., and refreshes a reservation recording information with a decoded program information, thereby synchronizing to an actual program broadcasting time of a broadcasting station and accordingly, correctly carrying out the reservation recording.

Switching section 20 switches the input/output of the video and audio signals according to an operation mode. A line-output of switching section 20 is line-inputted into the television set.

On-screen-display signal generating section 30 transforms an inputted on-screen-display data into an RGB signal, transforms the RGB signal into a video signal and overlaps the video signal on a composite video signal so as to output the same.

Video processing section 40 separates a signal reproduced from the video cassette tape into a luminance and a color signal, and signal-processes them respectively so as to output a composite video signal to on-screen-display signal generating section 30. Also, video processing section 40 separates a video signal provided from switching section 20 into a luminance and a color signal and signal-processes them respectively so as to provide a recorded video signal to a recording head.

Deck section 50 reproduces a signal from a video cassette tape 52 by operating capstan and drum motors, and records a provided recorded signal onto video cassette tape 52.

Input section 60 receives an optical signal of a remote controller 62 so as to generate a key signal in response to a pushing of a key pad of a front panel of the set.

Display section 70 is generally an electron-ray indicator tube and displays a time information.

Power section 80 receives a power-AC so as to generate an operating power V_{N} and a standby power V_{S}. Accordingly, during a standby mode, the standby power is applied to tuner section 10, PDC decoder 15, input section 60, display section 70 and control section 90 which are enclosed in a domain indicated as " 100". While, during an operating mode, the operating power is applied to an entire circuitry block including domains "100" and "200".

Control section 90 is a microcomputer including a memory 82. Microcomputer executes an operating program stored in memory 82 so as to control the above described sections and to execute a timer fast check program.

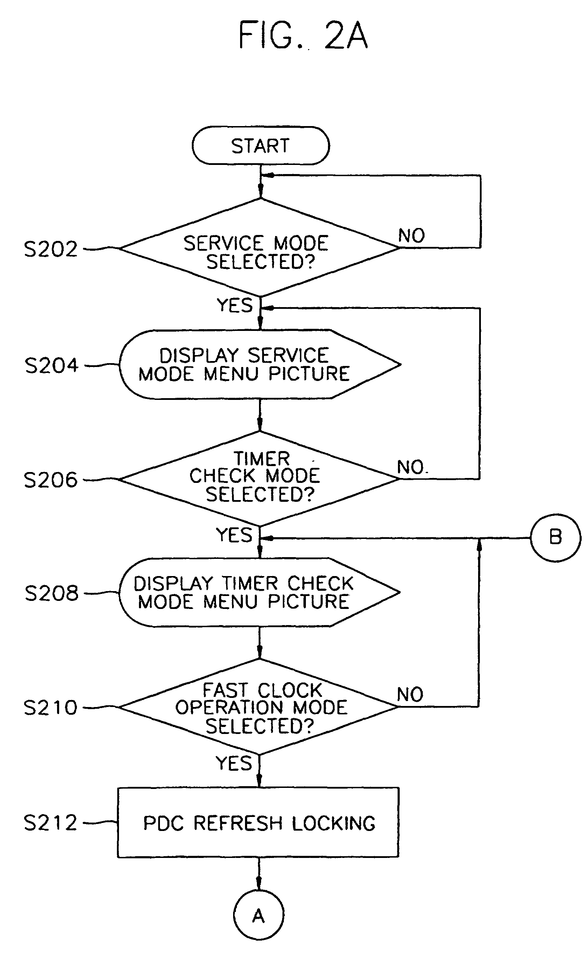

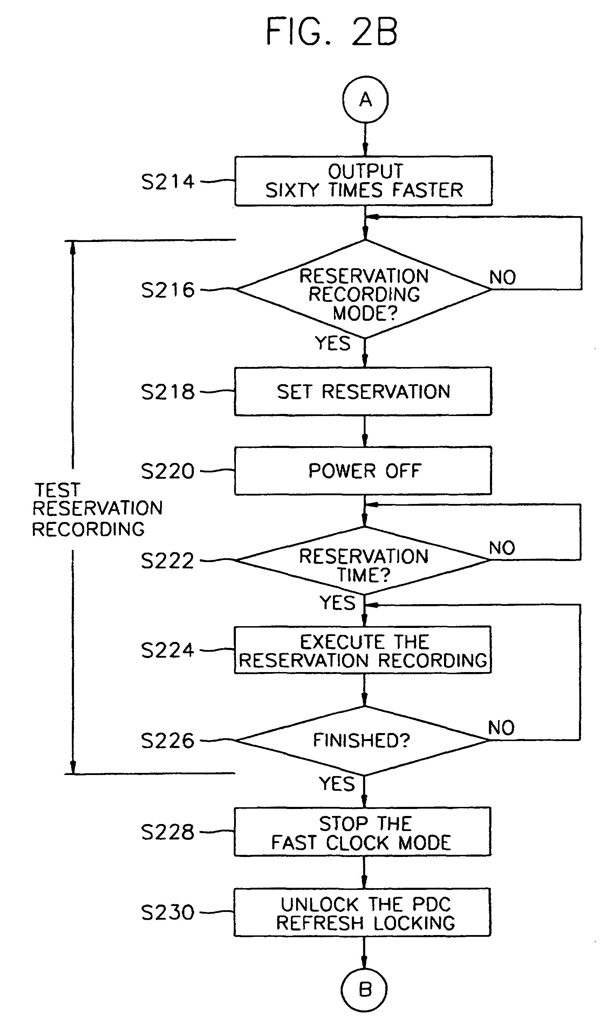

FIGs. 2A and 2B are a flowchart illustrating a method for fast checking a timer according to a preferred embodiment of the present invention.

Repairmen execute a timer fast check mode in a state where the video cassette tape recorder is connected to the television set.

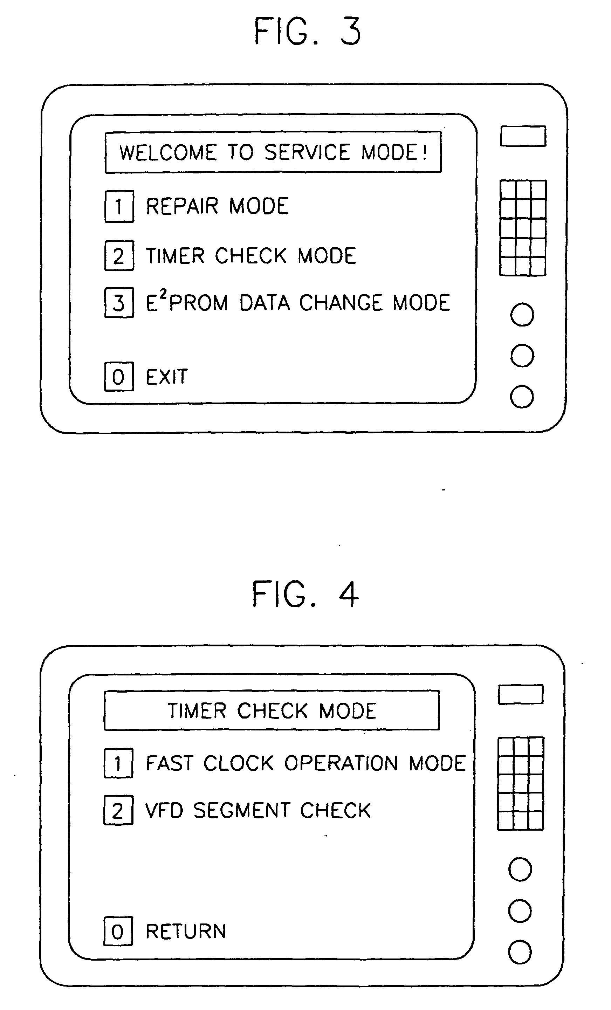

As shown in FIG. 2A, a service mode program according to the present invention is accessible only by a combination of password keys known only to a specific worker such as a set developer, a test worker or a repairman. This prevents consumers from accessing the service mode. The worker pushes a menu key at first by remote controller 62 and sequentially push password keys such as number keys "4", "8" and "4". Input section 60 receives a key signal of remote controller 62 and transmits the same to control section 90. Control section 90 determines that a service mode is selected if the inputted key combination is identical to a preset key combination (step S202) and transmits on-screen-display data to on-screen-display signal generating section 30 so as to generate a video signal. The generated video signal is transmitted to the television set through switching section 20 so as to be displayed as an on-screen-display picture as shown in FIG. 3 (step S204). The service mode includes generally a repair mode, a timer check mode and an EEPROM data change mode.

Thereafter, the worker pushes the number key "2" in order to select the timer check mode as shown in FIG. 3 by remote controller 62, and then the key signal is transmitted to control section 90 as above described. Control section 90 determines that the timer check mode is selected (step S206) and transmits on-screen-display data to on-screen-display signal generating section 30. Accordingly, on-screen-display signal generating section 30 generates a video signal. The generated video signal is transmitted to the television set through switching section 20 so as to be displayed as an on-screen-display picture as shown in FIG. 4 (step S208). The timer check mode includes a fast clock operation mode, an electron-ray indicator tube segment check mode.

As shown in FIG. 4, when the worker pushes the number key "1" by remote controller 62 in order to select the fast clock operation mode, by the same operation described above, control section 90 determines that the fast clock operation mode is selected (step S210), and transmits a control signal to PDC decoder 15 through a serial data bus so as to lock a refresh operation of PDC decoder 15 (step S212).

As shown in FIG. 2B, control section 90 operates an operation clock which is sixty times faster than a normal clock in such a manner that one minute of an inner timer lasts one second (step S214). In the fast clock operation mode, if the worker selects a reservation mode by remote controller 62 (step S216), control section 90 switches the system to the reservation mode in response to the selection of the worker (step S218). Thereafter, control section 90 controls power section 80 so as to turn off the operating power so that the system is switched to a standby mode (step S220). Accordingly, while in the conventional case, when the operating power is turned off, PDC decoder 15 carries out the refresh operation so as to refresh the program information with an actual program information of the broadcasting station, however, according to the present invention, since the refresh operation is locked in step 212, the refresh operation is not carried out.

That is, without the refresh lock, there is a possibility that PDC decoder 15 would refresh the program information in response to the fast clock which is sixty times faster than the normal clock, thereby inducing an error.

In the standby mode, control section 90 checks whether or not the reservation time set in step S218 comes by checking a time of the timer operated sixty times faster by the fast clock (step S222). If the time of the timer is identical to the reservation time while the fast clock is operated, control section 90 switches the system from the standby mode to the operating mode so as to carry out the reservation recording operation (step S224). Control section 90 checks whether the reservation recording operation is finished (step S226), and if so, then stops the fast clock operation mode (step S228), unlocks the PDC refresh locking mode (step S230) and returns the display to the menu picture of the timer check mode.

As above described, in the method and apparatus for fast checking a timer according to the present invention, since one hour in the normal clock is equal to one minute in the fast clock, the preset reservation time is fast checked and whether or not the reservation operation is being correctly carried out is fast checked.

In addition, in the method and apparatus for fast checking a timer according to the present invention, there can be no error in the program due to the PDC operation when the power is turned off or when it is six o'clock p.m. while carrying out the fast clock operation mode since the refresh operation is locked.

Although the preferred embodiment of the invention has been described, it is understood that the present invention should not be limited to this preferred embodiment, but various changes and modifications can be made by one skilled in the art within the scope of the invention as hereinafter claimed.

## Claims

1. A method for fast checking a timer of a video cassette tape recorder, said method **characterized by** comprising the steps of:
(i) displaying (S204) a service menu picture (Fig.3) of a service mode when the service mode is selected;
(ii) displaying (S208) a timer check menu picture (Fig.4) if a timer check mode in the service menu picture is selected;
(iii) locking (S212) a refresh operation of a television program information and operating a timer with a fast clock if a fast clock operation mode in the timer check menu picture is selected;
(iv) carrying out (S218) a reservation recording after a reservation setting of a television program is done; and
(v) operating (S228) the timer with a normal clock when the reservation recording is finished and unlocking a refresh locking state of the television program information.

2. The method for fast checking a timer of a video cassette tape recorder recited in claim 1, wherein in step (i), the service mode is selected by a combination of at least three remote controller inputs.

3. The method for fast checking a timer of a video cassette tape recorder recited in claim 1, wherein in step (iii), the fast clock is sixty times faster than the normal clock.

4. The method for fast checking a timer of a video cassette tape recorder recited in claim 1, wherein the television program information is a program delivery control information.

5. The method for fast checking a timer of a video cassette tape recorder recited in claim 4, wherein the program delivery control information is refreshed at least once a day.

6. The method for fast checking a timer of a video cassette tape recorder recited in claim 5, wherein the program delivery control information is refreshed when an operating power is turned off or at a predetermined time.

7. The method for fast checking a timer of a video cassette tape recorder recited in claim 6, wherein the predetermined time is six o'clock p.m..

8. A video cassette tape recorder, which comprises:
a tuner section (10) for outputting video and audio signals by decoding a television signal of a selected channel;
a decoder (15) for decoding a television program information superposed on the video signal, storing the decoded television program information and refreshing a stored television program information at least once a day;
a video processing section (40) for processing the video signal so as to record the video signal processed onto a video cassette tape loaded in a deck section;
an input means (60) for inputting a remote controller signal;
an on-screen-display signal generating means (30) for outputting an on-screen-display picture signal on a television after receiving on-screen-display data;
**characterised by**
a control section (90) for displaying a service menu picture of a service mode through the on-screen-display signal generating means when the service mode is selected, displaying a timer check menu picture if a timer check mode in the service menu picture is selected, locking a refresh operation of a television program information of the decoder, operating a timer with a fast clock, carrying out a reservation setting of a television program by the input means, carrying out a reservation recording by controlling the video processing section and the deck section, operating the timer with a normal clock when the reservation recording is finished, and unlocking a refresh locking state of the television program information of the decoder.

## Patentansprüche

1. Ein Verfahren zum schnellen Überprüfen eines Timers eines Video-Kassettenrekorders, wobei das gesagte Verfahren durch die folgenden Schritte gekennzeichnet ist:
(i) das Anzeigen (S204) eines Service-Menü-Bildes (Figur 3) eines Service-Modus, wenn der Service-Modus ausgewählt wird;
(ii) das Anzeigen (S208) eines Bildes eines Timer-Überprüf-Menüs (Figur 4), wenn ein Timer-Überprüf-Modus in dem Service-Menü-Bild ausgewählt wird;
(iii) das Blockieren (S212) einer Aktualisierungsbetätigung von Fernsehprogramminformationen, und das Betreiben eines Timers mit einer schnellen Uhr, wenn ein Modus eines Betriebs mit einer schnellen Uhr in dem Bild des Timer-Überprüf-Menüs ausgewählt wird;
(iv) das Ausführen (S218) einer vorgemerkten Aufnahme, nachdem eine Vormerkungseinstellung eines Fernsehprogramms ausgeführt wurde; und
(v) das Betreiben (S228) des Timers mit einer normalen Uhr, wenn die vorgemerkte Aufnahme beendet wurde, und das Entblocken eines Blockierungszustandes für eine Aktualisierung von Fernsehprogramminformationen.

2. Das Verfahren zum schnellen Überprüfen eines Timers eines Video-Kassettenrekorders gemäß Anspruch 1, wobei im Schritt (i) der Service-Modus durch eine Kombination von wenigstens drei Fernsteuerungseingaben ausgewählt wird.

3. Das Verfahren zum schnellen Überprüfen eines Timers eines Video-Kassettenrekorders gemäß Anspruch 1, wobei im Schritt (iii) die schnelle Uhr sechzigmal schneller als die normale Uhr ist.

4. Das Verfahren zum schnellen Überprüfen eines Timers eines Video-Kassettenrekorders gemäß Anspruch 1, wobei die Fernsehprogramminformationen Steuerinformationen zur Programmausstrahlung sind.

5. Das Verfahren zum schnellen Überprüfen eines Timers eines Video-Kassettenrekorders gemäß Anspruch 4, wobei die Steuerinformationen zur Programmausstrahlung wenigstens einmal am Tag aktualisiert werden.

6. Das Verfahren zum schnellen Überprüfen eines Timers eines Video-Kassettenrekorders gemäß Anspruch 5, wobei die Steuerinformationen zur Programmausstrahlung aktualisiert werden, wenn eine Betriebsspannung ausgeschaltet wird oder zu einer vorbestimmten Zeit.

7. Das Verfahren zum schnellen Überprüfen eines Timers eines Video-Kassettenrekorders gemäß Anspruch 6, wobei die vorbestimmte Zeit 6 Uhr morgens ist.

8. Ein Video-Kassettenrekorder, welcher umfasst:
einen Tuner-Bereich (10) zum Ausgeben von Video- und Audiosignalen, durch Dekodieren eines Fernsehsignals eines vorbestimmten Kanals; einen Dekodierer (15) zum Dekodieren von Fernsehprogramminformationen, welche auf dem Videosignal überlagert sind, zum Speichern der dekodierten Fernsehprogramminformationen und
zum Aktualisieren von gespeicherten Fernsehprogramminformationen wenigstens einmal am Tag;
einen Videoverarbeitungsbereich (40) zum Verarbeiten des Videosignals derart, dass das verarbeitete Videosignale auf einer Videokassette aufgenommen wird, die in einen Kassettendeckbereich geladen ist;
ein Eingabemittel (60) zum Eingeben eines Fernsteuerungssignals;
ein Mittel (30) zum Erzeugen eines Signals für eine Bildschirmanzeige zum Ausgeben eines Bildsignals einer Bildschirmanzeige auf einem Femseher, nach dem Empfangen von Bildschirmanzeigedaten;
**gekennzeichnet durch**
einen Steuerbereich (90) zum Anzeigen eines Service-Menü-Bildes eines Service-Modus **durch** das Mittel zum Erzeugen des Signals für die Bildschirmanzeige, wenn der Service-Modus ausgewählt wird, das Anzeigen eines Bildes für ein Timer-Überprüf-Menü, wenn ein Timer-Überprüf-Modus in dem Service-Menü-Bild ausgewählt wird, das Blockieren einer Aktualisierungsbetätigung für Fernsehprogramminformationen des Dekodierers, das Betreiben eines Timers mit einer schnellen Uhr, das Ausführen von vorgemerkten Einstellungen eines Fernsehprogramms **durch** das Eingabemittel, das Ausführen einer vorgemerkten Aufnahme **durch** Steuern des Video-Verarbeitungsbereiches und des Deck-Bereiches, das Betreiben des Timers mit einer normalen Uhr, wenn die vorgemerkte Aufnahme abgeschlossen ist, und das Entblockieren eines Blockierungszustandes einer Aktualisierung für die Fernsehprogramminformationen des Dekodierers.

## Revendications

1. Procédé de contrôle rapide de la minuterie d'un magnétoscope à cassette, ledit procédé étant **caractérisé en ce qu'**il comprend les étapes suivantes :
(i) l'affichage (S204) d'une image de menu de service (Fig. 3) d'un mode de service lorsque le mode de service est sélectionné ;
(ii) l'affichage (S208) d'une image de menu de contrôle de minuterie (Fig. 4) si un mode de contrôle de minuterie dans l'image du menu de service est sélectionné ;
(iii) le blocage (S212) d'une opération de régénération d'une information de programme de télévision et l'exploitation d'une minuterie avec une horloge rapide si un mode d'exploitation à horloge rapide est sélectionné dans l'image de menu de contrôle de minuterie ;
(iv) l'exécution (S218) d'un enregistrement de réservation après qu'un réglage de réservation d'un programme de télévision est effectué ; et
(v) l'exploitation (S228) de la minuterie avec une horloge normale lorsque l'enregistrement de réservation est terminé et le déblocage d'un état de blocage de régénération de l'information de programme de télévision.

2. Procédé de contrôle rapide de la minuterie d'un magnétoscope à cassette selon la revendication 1 dans lequel, dans l'étape (i), le mode de service est sélectionné par une combinaison d'au moins trois entrées d'une télécommande.

3. Procédé de contrôle rapide de la minuterie d'un magnétoscope à cassette selon la revendication 1 dans lequel, dans l'étape (iii), l'horloge rapide est soixante fois plus rapide que l'horloge normale.

4. Procédé de contrôle rapide de la minuterie d'un magnétoscope à cassette selon la revendication 1, dans lequel l'information de programme de télévision est une information de commande d'exécution de programme.

5. Procédé de contrôle rapide de la minuterie d'un magnétoscope à cassette selon la revendication 4, dans lequel l'information de commande d'exécution de programme est régénérée au moins une fois par jour.

6. Procédé de contrôle rapide de la minuterie d'un magnétoscope à cassette selon la revendication 5, dans lequel l'information de commande d'exécution de programme est régénérée lorsqu'une alimentation de fonctionnement est coupée ou à une heure prédéterminée.

7. Procédé de contrôle rapide de la minuterie d'un magnétoscope à cassette selon la revendication 6, dans lequel l'heure prédéterminée est dix-huit heures.

8. Magnétoscope à cassette qui comprend :
une section syntoniseur (10) pour fournir des signaux vidéo et audio en décodant un signal de télévision d'un canal sélectionné ;
un décodeur (15) pour décoder une information de programme de télévision superposée sur le signal vidéo, enregistrer l'information de programme de télévision décodé et régénérer au moins une fois par jour une information de programme de télévision enregistré ;
une section de traitement vidéo (40) pour traiter le signal vidéo de manière à enregistrer le signal vidéo traité sur une cassette vidéo chargée dans une section platine d'enregistrement ;
un moyen d'entrée (60) pour entrer un signal de télécommande ;
un moyen de génération d'un signal d'affichage sur écran (30) pour fournir un signal d'image d'affichage sur écran sur un téléviseur après la réception des données d'affichage sur écran ;
**caractérisé par** une section de commande (90) pour afficher une image de menu de service d'un mode de service par le moyen de génération de signal d'affichage sur écran lorsque le mode de service est sélectionné, l'affichage d'une image de menu de contrôle de minuterie si un mode de contrôle de minuterie est sélectionné dans l'image de menu de service, le blocage d'une opération de régénération d'une information de programme de télévision du décodeur, l'exploitation d'une minuterie avec une horloge rapide, l'exécution d'un réglage de réservation d'un programme de télévision par le moyen d'entrée, l'exécution d'un enregistrement de réservation par la commande de la section de traitement vidéo et de la section platine, l'exploitation de la minuterie avec une horloge normale lorsque l'enregistrement de réservation est terminé, et le déblocage d'un état de blocage de régénération de l'information de programme de télévision du décodeur.
